# EUROPEAN PATENT APPLICATION

(11) **EP 4 434 941 A1**
(43) Date of publication of application: **25.09.2024**
(21) Application number: 23855173.3
(22) Date of filing: 17.08.2023
(51) Int. Cl.: C01G 53/00, H01M 4/525, H01M 4/505, H01M 4/02

(54) **POSITIVE ELECTRODE ACTIVE MATERIAL PRECURSOR, METHOD FOR MANUFACTURING SAME, POSITIVE ELECTRODE ACTIVE MATERIAL, AND METHOD FOR MANUFACTURING POSITIVE ELECTRODE ACTIVE MATERIAL**

(30) Priority: 17.08.2022 KR 20220102627; 30.09.2022 KR 20220125537
(71) Applicant: LG Chem, Ltd., Yeongdeungpo-gu Seoul 07336 (KR)
(72) Inventor: HWANG, Byung Hyun, Daejeon 34122 (KR); KIM, Nam Il, Daejeon 34122 (KR); JUNG, Hyun Jin, Daejeon 34122 (KR); BEAK, Chan Ju, Daejeon 34122 (KR); HWANG, Hye Youn, Daejeon 34122 (KR); PARK, Hyun Ah, Daejeon 34122 (KR); KANG, Seong Hoon, Daejeon 34122 (KR); HONG, Won Taek, Daejeon 34122 (KR); KIM, Won Tae, Daejeon 34122 (KR); KIM, Woo Hyun, Daejeon 34122 (KR); KIM, Jun Gil, Daejeon 34122 (KR); YOON, Ju Han, Daejeon 34122 (KR); PARK, Young Su, Daejeon 34122 (KR)
(74) Representative: Hoffmann Eitle
(86) International application number: PCT/KR2023/012217
(87) International publication number: WO 2024/039207

(57) **Abstract**

The present invention relates to a positive electrode active material precursor, a method for preparing the same, a positive electrode active material, and a method for preparing a positive electrode active material, and provides: a positive electrode active material precursor including Ni and Mn and secondary particles formed by the aggregation of a plurality of primary particles, wherein the secondary particles have a ratio of a core area to a total area of the particles (core area/total area) of 28.7% to 34.1%, and the porosity represented by Equation 1 below is 11.3% to 11.7%; a method for preparing the positive electrode active material precursor; a positive electrode active material including a reaction product of the positive electrode active material precursor and a lithium raw material; and a method for preparing a positive electrode active material using the positive electrode active material precursor.

## Description

### TECHNICAL FIELD

### Cross-reference to Related Applications

This application claims the benefit of Korean Patent Application No. 10-2022-0102627, filed on August 17, 2022, and Korean Patent Application No. 10-2022-0125537, filed on September 30, 2022, in the Korean Intellectual Property Office, the disclosures of which are incorporated herein in their entirety by reference.

### Technical Field

The present invention relates to a positive electrode active material precursor, a method for preparing the same, a positive electrode active material, and a method for preparing a positive electrode active material using the same.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt composite metal oxide of LiCoO₂ having a high operating voltage and excellent capacity characteristics has been mainly used. However, since the LiCoO₂ has very poor thermal properties due to an unstable crystal structure caused by delithiation and is expensive, there is a limitation in using a large amount of the LiCoO₂ as a power source for applications such as electric vehicles.

Lithium manganese composite metal oxides (LiMnO₂ or LiMn₂O₄), lithium iron phosphate compounds (LiFePO₄, etc.), or lithium nickel composite metal oxides (LiNiO₂, etc.) have been developed as materials for replacing the LiCoO₂. Among these materials, research and development of the lithium nickel composite metal oxides, in which a large capacity battery may be easily achieved due to a high reversible capacity of about 200 mAh/g, have been actively conducted. However, the LiNiO₂ has limitations in that the LiNiO₂ has poorer thermal stability than the LiCoO₂ and, when an internal short circuit occurs in a charged state due to an external pressure, the positive electrode active material itself is decomposed to cause rupture and ignition of the battery.

Accordingly, as a method to improve low thermal stability while maintaining the excellent reversible capacity of the LiNiO₂, a nickel cobalt manganese-based lithium composite transition metal oxide (hereinafter, simply referred to as "NCM-based lithium oxide"), in which a portion of Ni is substituted with Mn and Co, has been developed.

However, due to the recent increase in the price of cobalt (Co), a lithium-rich (Li-rich) NCM-based positive electrode active material capable of meeting high capacity while containing a relatively low amount of the cobalt (Co) has been developed.

In general, the precursor of the NCM-based positive electrode active material is synthesized by a co-precipitation method, and in this case, ammonia (NH₄OH) as a complex forming agent is used as a necessary raw material. The ammonia is a material that serves as a catalyst for assisting precursor synthesis by forming a metal salt and a complex during precursor preparation, and is an essential raw material for precursor synthesis or a regulated material for odor and environment, thereby increasing the cost of precursor preparation.

In addition, the ammonia serves as a catalyst and has a great effect on physical properties such as particle size and particle shape of a precursor prepared according to the concentration (amount) thereof, and thus, in order to prepare a positive electrode active material having high physical property reproducibility, the physical property reproducibility of the positive electrode active material precursor should be high. Thus, it is necessary to finely manage the amount of ammonia used that affects the physical property reproducibility of the positive electrode active material precursor, so that the process is difficult.

Therefore, it has been required to develop a method for preparing a positive electrode active material precursor which is environmentally friendly, has high process efficiency, and has excellent physical property reproducibility since a co-precipitation reaction may be smoothly performed even in the absence of ammonia.

### [PRIOR ART DOCUMENT]

(Patent Document) Korean Patent Laid-Open Publication No. 10- 2016-0063982 (Published date: June 07, 2016)

### DISCLOSURE OF THE INVENTION

### TECHNICAL PROBLEM

An aspect of the present invention provides a positive electrode active material precursor having excellent particle strength.

In addition, another aspect of the present invention provides a method for preparing the positive electrode active material precursor which is environmentally friendly and has excellent physical property reproducibility and in which a co-precipitation reaction is smoothly performed even in the absence of ammonia.

Also, yet another aspect of the present invention provides a positive electrode active material including a lithium transition metal oxide which is a reaction product of the positive electrode active material precursor and a lithium raw material.

Furthermore, still yet another aspect of the present invention provides a method for preparing a positive electrode active material by using the positive electrode active material precursor.

### TECHNICAL SOLUTION

To solve the above problems, the present invention provides a positive electrode active material precursor, a method for preparing the same, a positive electrode active material, and a method for preparing a positive electrode active material by using the positive electrode active material precursor.
(1) According to an aspect of the present invention, there is provided a positive electrode active material precursor including Ni and Mn and secondary particles formed by the aggregation of a plurality of primary particles, wherein the secondary particles have a ratio of a core area to a total area of the particles (core area/total area) of 28.7% to 34.1%, and the porosity represented by Equation 1 below is 11.3% to 11.7%:Porosity (%)= (pore area of total particles / area of total particles) × 100
(2) In (1) above of the present invention, there is provided the positive electrode active material precursor, wherein the secondary particles have a core porosity of 13.5% to 15.0%.
(3) In (1) or (2) above of the present invention, there is provided the positive electrode active material precursor, wherein the secondary particles have an average particle diameter (D₅₀) of 3 um to 15 µm.
(4) In any one of (1) to (3) above of the present invention, there is provided the positive electrode active material precursor, wherein the primary particles have a needle shape having a thickness of 40 nm to 100 nm and an aspect ratio of 3 to 10.
(5) In any one of (1) to (4) above of the present invention, there is provided the positive electrode active material precursor, which is represented by Formula 1 below:

   [Formula 1] [NiₐMn_{b}M¹_{c}](OH)₂

   In Formula 1 above, 0<a<0.4, 0.5≤b<1, and 0≤c≤0.1 are satisfied, and M¹ is at least one selected from the group consisting of Cu, Fe, Mg, B, Cr, V, Ti, Ta, Nb, Mo, Y, W, and Zr.
(6) In any one of (1) to (5) above of the present invention, there is provided the positive electrode active material precursor, wherein a specific surface area is 20 m²/g to 35 m²/g, and a tap density is 1.4 g/cc to 2.0 g/cc.
(7) In any one of (1) to (5) above of the present invention, there is provided the positive electrode active material precursor, wherein a specific surface area is 15 m²/g to 30 m²/g, and a tap density is 1.4 g/cc to 2.0 g/cc.
(8) According to another aspect of the present invention, there is provided a method for preparing a positive electrode active material precursor, the method including a step of performing a co-precipitation reaction on at least two transition metal raw material in the presence of a basic aqueous solution in a nitrogen atmosphere to prepare a reaction solution including a transition metal hydroxide, wherein the co-precipitation reaction is performed by adding air in the absence of ammonia.
(9) In (8) above of the present invention, there is provided the method for preparing a positive electrode active material precursor, wherein the air is added in an amount of greater than 0 volume% and less than 10 volume% based on 100 volume% of nitrogen.
(10) In (8) or (9) above of the present invention, there is provided the method for preparing a positive electrode active material precursor, wherein the co-precipitation reaction is performed by continuously injecting air, and the total amount of air injected during the co-precipitation reaction is greater than 0 to 5 volume% based on 100 volume% of the total amount of nitrogen used during the co-precipitation reaction.
(11) In any one of (8) to (10) above of the present invention, there is provided the method for preparing a positive electrode active material precursor, further including a step of aging the reaction solution, wherein the aging is performed by allowing the reaction solution to stand for 6-24 hours in a nitrogen atmosphere under the condition of a pH of 12 to 14.
(12) In any one of (8) to (11) above of the present invention, there is provided the method for preparing a positive electrode active material precursor, wherein the aging is performed in a temperature range of 30 °C to 50 °C.
(13) In any one of (8) to (11) above of the present invention, there is provided the method for preparing a positive electrode active material precursor, including steps of: preparing a reaction solution including a transition metal hydroxide by the co-precipitation reaction of at least two transition metal raw materials in the presence of a basic aqueous solution in a nitrogen atmosphere; aging the reaction solution; and sequentially performing washing, filtration, and drying.
(14) In (13) above of the present invention, there is provided the method for preparing a positive electrode active material precursor, wherein the washing is performed by sequentially performing a primary washing and a secondary washing, the primary washing is performed with a basic aqueous solution, and the secondary washing is performed with distilled water.
(15) In any one of (8) to (14) above of the present invention, there is provided the method for preparing a positive electrode active material precursor, wherein the transition metal is at least two selected from among Ni, Co, Mn, Cu, Fe, Mg, B, Cr, V, Ti, Ta, Nb, Y, Mo, W and Zr.
(16) According to yet another aspect of the present invention, there is provided a positive electrode active material including: a lithium transition metal oxide which is a reaction product of any one of the positive electrode active material precursors of (1) to (7) above and a lithium raw material; and secondary particles formed by the aggregation of a plurality of primary particles, wherein the secondary particles have a ratio of a shell thickness to a semi-major axis of the particle of 30% to 60%.
(17) In (16) above of the present invention, there is provided the positive electrode active material, which is represented by Formula 2 below:

   [Formula 2] Liₓ[NiₐMn_{b}M¹_{c}]O₂

   In Formula 2 above, 1.1<a<1.3, 0<a<0.4, 0.5≤b<1, 0≤c≤0.1, and x+a+b+c=2 are satisfied, and M¹ is at least one selected from the group consisting of Cu, Fe, Mg, B, Cr, V, Ti, Ta, Nb, Mo, Y, W, and Zr.
(18) According to still yet another aspect of the present invention, there is provided a method for preparing a positive electrode active material, the method including a step of mixing the positive electrode active material precursor described in any one of (1) to (7) above and a lithium raw material; and sintering the mixture.
(19) In (18) above of the present invention, there is provided the method for preparing a positive electrode active material, wherein the positive electrode active material precursor and the lithium raw material are mixed such that a molar ratio of the positive electrode active material precursor and lithium elements in the lithium raw material becomes 1:1.2 to 1:1.6.

### ADVANTAGEOUS EFFECTS

The positive electrode active material precursor according to the present invention has thin primary particles and dense secondary particles such that the inner core part of the particle has many pores and the outer shell is dense and has a uniform distribution of fine pores, thus enabling the positive electrode active material precursor to have a defined area ratio and porosity, so that the charging/discharging capacity performance of the positive electrode active material, to which the positive electrode active material precursor is applied, may be improved.

Also, in the method for preparing a positive electrode active material precursor according to the present invention, air is introduced in a nitrogen atmosphere and a co-precipitation reaction is performed such that the precursor is easily prepared even in the absence of ammonia, and the reproducibility of the physical properties of the precursor may be excellent, and the method is environmentally friendly.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 shows images of (a) a particle shape at a 2K magnification, (b) a particle shape at 15K magnification, (c) a particle shape at a 50K magnification, and (d) a particle cross-section at a 20K magnification, as a result of SEM analysis of the positive electrode active material precursor of Example 1;
FIG. 2 shows images of (a) a particle shape at a 2K magnification, (b) a particle shape at a 15K magnification, (c) a particle shape at a 50K magnification, and (d) a particle cross-section at a 20K magnification, as a result of SEM analysis of the positive electrode active material precursor of Comparative Example 1;
FIG. 3 shows images of (a) a particle shape at a 2K magnification, (b) a particle shape at a 15K magnification, (c) a particle shape at a 50K magnification, and (d) a particle cross-section at a 20K magnification, as a result of SEM analysis of the positive electrode active material precursor of Comparative Example 2;
FIG. 4 shows images of (a) a particle shape at a 2K magnification and (b) a particle shape at a 15K magnification, as a result of SEM analysis of the positive electrode active material precursor of Comparative Example 3;
FIG. 5 shows images of (a) a particle shape at a 2K magnification and (b) a particle shape at a 15K magnification, as a result of SEM analysis of the positive electrode active material precursor of Comparative Example 4;
FIG. 6 is a graph for comparing particle size distributions of the positive electrode active material precursors of Example 1 and Comparative Examples 1 to 4;
FIG. 7 shows images of (a) a particle shape at a 50K magnification and (b) a particle cross-section at a 50K magnification, as a result of SEM analysis of the positive electrode active material of Example 1;
FIG. 8 shows images of (a) a particle shape at a 50K magnification and (b) a particle cross-section at a 50K magnification, as a result of SEM analysis of the positive electrode active material of Comparative Example 1;
FIG. 9 shows (a) a particle shape at a 50K magnification and (b) a particle cross-section at a 50K magnification, as a result of SEM analysis of the positive electrode active material of Comparative Example 2;
FIG. 10 shows images of (a) a particle shape at a 15K magnification and (b) a particle shape at a 1K magnification, as a result of SEM analysis of the positive electrode active material precursor of Example 2;
FIG. 11 shows images of (a) a particle shape at a 15K magnification and (b) a particle shape at a 1K magnification, as a result of SEM analysis of the positive electrode active material precursor of Example 3;
FIG. 12 is an XRD graph of the positive electrode active material precursors of Examples 2 and 3;
FIG. 13 shows images of (a) a particle shape at a 25K magnification and (b) a particle shape at a 1K magnification, as a result of SEM analysis of the positive electrode active material of Example 2; and
FIG. 14 shows images of (a) a particle shape at a 25K magnification and (b) a particle shape at a 1K magnification, as a result of SEM analysis of the positive electrode active material of Example 3.

### BEST MODE FOR CARRYING OUT THE INVENTION

Terms or words used in this specification and claims should not be interpreted as being limited to a conventional or dictionary meaning, and should be interpreted as the meaning and concept that are consistent with the technical spirit, based on the principle that an inventor can appropriately define the concepts of terms in order to explain the invention in the best ways.

### Terms

As used herein, the term "primary particle" refers to a particle unit in which an external grain boundary does not exist when observed in the view at a magnification of 5,000 to 20,000 using a scanning electron microscope (SEM).

As used herein, the term "secondary particle" is a particle formed by the aggregation of a plurality of primary particles.

As used herein, the term "average particle diameter (D₅₀)" refers to a particle diameter at 50% of a volume cumulative distribution according to the particle diameter.

### Measurement methods

In the present invention, the porosity of the precursor, a ratio of a core area to the total area of the precursor, and the porosity of the core were measured with a cross-sectional image of the particle obtained by using SEM and an image analysis program.

Specifically, a cross-sectional image (50 K magnification) of each precursor was obtained by using SEM (Hitachi Co., Ltd.), and the porosity of the precursor, the core porosity, and the ratio of the core area to the total area were analyzed from the image. The precursor, carbon black Super-P as a conductive agent, and poly(vinylidene fluoride) as a binder were used in a weight ratio of 54:4:43 (based on 1 g of the precursor) and uniformly mixed with 1.8 g of *N-*methyl pyrrolidone to prepare a slurry, the prepared slurry was thinly applied on an aluminum foil to a thickness of 0.25 mm, dried at 100 °C to prepare an electrode for measuring the cross-section, and the cross-section of the prepared electrode, to which the precursor was applied, was irradiated with an ion beam by using an ion milling machine to prepare a specimen for SEM measurement. A cross-sectional image of the precursor was obtained by using the specimen for SEM measurement, a particle was selected from the cross-sectional image, a cross-section of one particle was extracted by using a watershed image processing technique using an image processing program (Pore analysis), and a core part was identified by using an erosion image processing technique. Thereafter, the image was binary-converted by using a threshold image processing technique, and the porosity of the precursor, the core porosity, and the ratio of the core area to the total area were analyzed. In this case, the core part was set as a part in which pores are concentrated inside the particle, and a region formed by connecting the pores present at the outermost edge among the inside pores using a program was set as the core part. In addition, 10 particles having a particle diameter of 2-8 µm in the cross-sectional image were selected at a time, the porosity of the precursor, the core porosity, and the ratio of the core area to the total area were measured for each particle by the above method, and results are shown as the average of the measured values.

In the present invention, the average particle diameter was measured by setting the particle size characteristics of the precursor to a refractive index of 1.55 using a particle size analyzer (S-3500, Microtrac).

In the present invention, the tap density was measured by putting 50 g of the precursor into a 50-mL mass cylinder and performing a stroke 3,000 times using TAPDENSER (KYT-4000K, SEISHIN ENTERPRISE Co., Ltd.).

In the present invention, the specific surface area was measured with a relative pressure (P/Po) of 0.05-0.2 after pre-treating the precursor at 150 °C for 3 hours using Tristar II 3020 (Micromeritics Co.).

The present invention provides a positive electrode active material precursor, a method for preparing the same, a positive electrode active material including a reaction product of a lithium raw material with the same, and a method for preparing a positive electrode active material using the positive electrode active material precursor.

Hereinafter, the present invention will be described in more detail.

### Positive Electrode Active Material Precursor

The present invention provides a positive electrode active material precursor, which may improve charge and discharge capacity by having a particle form having a core part with a large number of pores and a dense shell part with pores.

The positive electrode active material precursor according to an embodiment of the present invention includes Ni and Mn and secondary particles formed by the aggregation of a plurality of primary particles, wherein the secondary particles have a ratio of a core area to a total area of the particles (core area/total area) of 28.7% to 34.1%, and the porosity represented by Equation 1 below is 11.3% to 11.7%: Porosity (%)= (pore area of total particles / area of total particles) × 100

In addition, the core porosity of the secondary particles may be 13.50% to 15.00%, and the secondary particles may have an average particle diameter (D₅₀) of 3 um to 15 µm.

In addition, the primary particles may have a needle shape having a thickness of 40 nm to 100 nm and an aspect ratio of 3 to 10.

As another example, the positive electrode active material precursor may be represented by Formula 1 below:

[Formula 1] [NiₐMn_{b}M¹_{c}](OH)₂

In Formula 1 above, 0<a<0.4, 0.5≤b<1, and 0≤c≤0.1 are satisfied, and M¹ is at least one selected from the group consisting of Cu, Fe, Mg, B, Cr, V, Ti, Ta, Nb, Mo, Y, W, and Zr.

In addition, the positive electrode active material precursor may have a specific surface area of 20 m²/g to 35 m²/g, and a tap density of 1.4 g/cc to 2.0 g/cc.

As another example, the positive electrode active material precursor may have a specific surface area of 15 m²/g to 30 m²/g, and a tap density of 1.4 g/cc to 2.0 g/cc.

As another example, the positive electrode active material precursor may have an average particle diameter (D₅₀) of 3 um to 6 µm, a specific surface area of 20 m²/g to 35 m²/g, and a tap density of 1.4 g/cc to 2.0 g/cc.

As another example, the positive electrode active material precursor may have an average particle diameter (D₅₀) of 7 um to 15 um, a specific surface area of 15 m²/g to 30 m²/g, and a tap density of 1.4 g/cc to 2.0 g/cc.

### Method of Preparing Positive Electrode Active Material Precursor

The present invention provides a method for preparing a positive electrode active material precursor, the method capable of preparing the positive electrode active material precursor in an environmentally friendly manner with high reproducibility of physical properties.

The method for preparing the positive electrode active material precursor according to an embodiment of the present invention may include performing a co-precipitation reaction on at least two transition metal raw material in the presence of a basic aqueous solution in a nitrogen atmosphere to prepare a reaction solution including a transition metal hydroxide, wherein the co-precipitation reaction is performed by adding air in the absence of ammonia.

The co-precipitation reaction is for generating a transition metal hydroxide from the transition metal raw material, may be performed by injecting air in the presence of a basic aqueous solution in a nitrogen atmosphere, and may be performed in the absence of ammonia. Here, the phrase "in the presence of a basic aqueous solution" means that the basic aqueous solution is included as a reactant during the co-precipitation reaction.

In general, the precursor of the NCM-based positive electrode active material is synthesized by the formation of a complex with a transition metal salt using ammonia, which is a complex forming agent, wherein the ammonia is a regulated material for odor and environment and essentially requires the construction of a treatment system thereof, such that excessive treatment system costs are generated depending on the scale of production, and thus there is a limitation in that the process efficiency is poor when the precursor is applied to industry. In addition, ammonia serves as a catalyst in the synthesis of precursors, wherein the physical properties of the precursors prepared are significantly affected by the concentration of the ammonia, the control of primary particles and fine pores of the precursors is not easy, and consequently the diffusion rate of Li is not easy to control when the precursor is applied as a positive electrode active material, thereby limiting capacity and output characteristics, and it is difficult to reproduce constant physical properties of the positive electrode active material.

However, the method for preparing a positive electrode active material according to the present invention involves performing a co-precipitation reaction in the absence of ammonia, wherein the co-precipitation reaction is performed by the introduction of air in a nitrogen atmosphere, such that the air replaces the role of ammonia, thereby smoothly performing the co-precipitation reaction and being environmentally friendly, and highly reproducible.

Specifically, the co-precipitation reaction according to an embodiment of the present invention may be performed by injecting air in a nitrogen atmosphere, and in this case, the air may be injected in an amount of greater than 0 volume% and less than 10 volume%, more specifically greater than 0 to 5 volume%, based on 100 volume% of nitrogen.

More specifically, the co-precipitation reaction is performed by continuously injecting air in a nitrogen atmosphere, and in this case, the total amount of the air injected during the co-precipitation reaction may be greater than 0 volume% and less than 10 volume% or greater than 0 to 5 volume% based on 100 volume% of the total amount of nitrogen used during the co-precipitation reaction. If the air is injected in an amount of 10 volume% or more with respect to nitrogen, aggregation between particles of the prepared precursor may occur, and thus an additional grinding process may be required or it may be difficult to prepare the positive electrode active material precursor that satisfies the above-described physical properties due to the deformation of particle size and particle state.

The transition metal raw material may be sulfate, acetate, nitrate, halide, sulfide, hydroxide, oxide, or oxyhydroxide of the transition metal, and the transition metal may be at least two selected from Ni, Mn, Cu, Fe, Mg, B, Cr, V, Ti, Ta, Nb, Mo, Y, W, and Zr.

As another example, the transition metal raw material may include a nickel raw material and a manganese raw material.

Specifically, the nickel raw material may be, for example, nickel-containing acetate, nitrate, sulfate, halide, sulfide, hydroxide, oxide, or oxyhydroxide, and more specifically, may be, for example, Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, fatty acid nickel salt, nickel halide, or a combination thereof, but is not limited thereto.

In addition, the manganese raw material may be, for example, manganese-containing acetate, nitrate, sulfate, halide, sulfide, hydroxide, oxide, or oxyhydroxide, and specific examples thereof may be manganese oxide such as Mn₂O₃, MnO₂, or Mn₃O₄; manganese salt such as MnCO₃, Mn(NO₃)₂, MnsO₄, manganese acetate, dicarboxylic acid manganese salt, manganese citrate, or fatty acid manganese salt; oxymanganese hydroxide, manganese chloride, or a combination thereof, but is not limited thereto.

As another example, if necessary, the metal solution may further include an M¹-containing raw material and/or an M²-containing raw material.

In the M¹-containing raw material, the M¹ element may be at least one selected from the group consisting of Cu, Fe, Mg, B, Cr, V, Ti, Ta, Nb, Mo, Y, W, and Zr, and the M¹-containing raw material may be acetate, nitrate, sulfate, halide, sulfide, hydroxide, oxide, or oxyhydroxide, which contains the M¹ element.

In addition, the transition metal raw material may be used in the form of a metal solution in which the transition metal raw material is dissolved in a solvent for a more uniform co-precipitation reaction, and in this case, the metal solution may be prepared by adding the transition metal raw material to a solvent, specifically, water, or a mixed solvent of an organic solvent (e.g., alcohol, etc.) which may be uniformly mixed with water, or may be prepared by mixing an aqueous solution of the transition metal raw material.

In this case, the transition metal raw material may be mixed with a stoichiometric ratio that may satisfy the molar ratio of each element in the transition metal hydroxide particles formed by the co-precipitation reaction. That is, in the present invention, the transition metal raw material may be mixed in an amount capable of satisfying the molar fractions of a, b, and c in Formula 1 which will be described below.

The basic aqueous solution is a precipitant and may be prepared by dissolving a strong base compound in distilled water.

In addition, the basic aqueous solution may include 15 wt% to 35 wt% of the strong base compound or may have a pH of 9 to 13.

Here, the strong base compound may be hydroxide or hydrate of an alkali metal, hydroxide or hydrate of an alkali earth metal, or a combination thereof, and more specifically, the strong base compound may be sodium hydroxide, potassium hydroxide, calcium hydroxide, lithium hydroxide, or a combination thereof.

As another example, the basic aqueous solution may be at least one selected from among an aqueous sodium hydroxide solution, an aqueous potassium hydroxide solution, an aqueous calcium hydroxide solution, and an aqueous lithium hydroxide solution.

In addition, the basic aqueous solution is added to adjust the pH during the co-precipitation reaction, and may be added in an amount such that the pH in the reaction system, in which the co-precipitation reaction proceeds, is 9 to 13.

Meanwhile, the co-precipitation reaction may be performed at a temperature of 40 °C to 70 °C. In addition, in order to increase the reaction rate of the co-precipitation reaction, a stirring process may be optionally performed, and in this case, the stirring rate may be in the range of 100 rpm to 2,000 rpm.

As another example, the method for preparing the positive electrode active material precursor according to an embodiment of the present invention may further include aging the reaction solution after the co-precipitation reaction, and the aging may be performed by allowing the reaction solution to stand for 6 hours to 24 hours under the condition of pH 12 to 14 in a nitrogen atmosphere.

As another example, the aging may be performed in a temperature range of 30 °C to 50 °C.

The NCM-based positive electrode active material precursors used for the preparation of lithium-rich (Li-rich) NCM-based positive electrode active materials are synthesized by a co-precipitation method, and recently, a method for improving the density of the precursors to maximize the energy density of the battery has been studied, and a co-precipitation method for co-precipitating in the presence of a basic solution (*e.g.,* sodium hydroxide) has been used as one method. In this case, a metal oxide (*e.g.,* manganese oxide) is generated in the reaction system separately from the desired precursor material, and this causes the aggregation between precursor particles during drying after washing, thereby causing limitations in the classification process. There is a limitation in that the metal oxide also remains as an impurity in the positive electrode active material even after being applied as a positive electrode active material raw material and sintered, thereby causing a decrease in capacity and life of the positive electrode active material.

When the method for preparing a positive electrode active material precursor according to the present invention further comprises the aging after the co-precipitation reaction, the oxidation of a transition metal hydroxide in a reaction solution is prevented so as to suppress the generation of a metal oxide, particularly, manganese oxide, thereby rendering the method free from the problems of aggregation and classification processes due to the metal oxide during drying, and having the effect that there are no metal oxide impurities in the finally prepared positive electrode active material precursor, or the method can significantly reduce the metal oxide impurities compared to conventional methods.

As another example, in the preparation method according to an embodiment of the present invention, the aging may be performed for 12 hours to 24 hours in a nitrogen atmosphere under the condition of a pH of 13 to 14 and a temperature of 40 °C to 50 °C in terms of more easily achieving the desired effect.

Meanwhile, in the aging, the pH condition may be prepared by adding a strong base compound to the reaction solution, wherein the strong base compound may be added in its own state or in an aqueous solution state in which the strong base compound is dissolved in distilled water, and the strong base compound is not particularly limited as long as it is generally known as a strong base compound, but may be, for example, sodium hydroxide, potassium hydroxide, calcium hydroxide, or lithium hydroxide.

As another example, the method for preparing a positive electrode active material precursor according to an embodiment of the present invention may include preparing a reaction solution including a transition metal hydroxide by the co-precipitation reaction of at least two transition metal raw materials in the presence of a basic aqueous solution in a nitrogen atmosphere; aging the reaction solution; and sequentially performing washing, filtration, and drying.

Here, the co-precipitation reaction and aging are the same as described above. The washing, filtration, and drying may be carried out by conventional means used in the art.

The washing may be performed by sequentially performing a primary washing and a secondary washing, the primary washing may be performed with a basic aqueous solution, and the secondary washing may be performed with distilled water.

Here, the basic aqueous solution used in the primary washing may have a pH of 12 to 14, and for example, the basic aqueous solution may contain 2 wt% to 5 wt% of the strong base compound.

In the method for preparing a positive electrode active material precursor according to the present invention, when the washing is performed by performing the primary washing using a basic aqueous solution and a secondary washing process using distilled water, the oxidation of the transition metal hydroxide, which may be generated in the washing process, may be prevented and impurities may be additionally removed.

The drying may be performed at 110 °C to 400 °C for 15 hours to 30 hours.

### Positive Electrode Active Material

The present invention provides a positive electrode active material including a lithium transition metal oxide which is a reaction product of the positive electrode active material precursor and a lithium raw material.

The positive electrode active material according to an embodiment of the present invention includes: a lithium transition metal oxide which is a reaction product of the positive electrode active material precursors and a lithium raw material; and secondary particles formed by the aggregation of a plurality of primary particles, wherein the secondary particles have a ratio of a shell thickness to a semi-major axis of the particle of 30% to 60%.

As another example, the positive electrode active material may be represented by Formula 2 below:

[Formula 2] Liₓ[NiₐMn_{b}M¹_{c}]O₂

In Formula 2 above, 1.1<a<1.3, 0<a<0.4, 0.5≤b<1, 0≤c≤0.1, and x+a+b+c=2 are satisfied, and M¹ is at least one selected from the group consisting of Cu, Fe, Mg, B, Cr, V, Ti, Ta, Nb, Mo, Y, W, and Zr.

### Method for Preparing Positive Electrode Active Material

The present invention provides a method for preparing the positive electrode active material by using the positive electrode active material precursor.

The method for preparing a positive electrode active material according to an embodiment of the present invention may include: mixing the positive electrode active material precursor and a lithium raw material; and sintering the mixture.

Specifically, the method for preparing a positive electrode active material according to the present invention may be performed by a method for preparing a positive electrode active material known in the art except for using the positive electrode active material precursor according to the present invention, and the method is not particularly limited.

Examples of the lithium raw material may include a lithium-containing carbonate (*e*.*g*., lithium carbonate, *etc*.), a hydrate (*e*.*g*., lithium hydroxide hydrate (LiOH·H₂O), *etc.*), a hydroxide (*e*.*g*., lithium hydroxide, *etc*.), a nitrate (*e*.*g*., lithium nitrate (LiNO₃), *etc*.), a chloride (*e*.*g*., lithium chloride (LiCl), *etc*.)*, etc.,* and any one alone thereof or a mixture of two or more thereof may be used.

Meanwhile, the mixing of the positive electrode active material precursor and the lithium raw material may be performed by solid phase mixing such as jet milling, and the mixture ratio of the positive electrode active material precursor and the lithium raw material may be determined within a range satisfying the molar fraction of each component in the finally prepared positive electrode active material. More specifically, the positive electrode active material precursor and the lithium raw material may be mixed such that a molar ratio of the positive electrode active material precursor and lithium elements in the lithium raw material becomes 1:1.2 to 1:1.6.

In addition, although not essential, raw materials for doping a part of the transition metal and/or oxygen of the positive electrode active material may be additionally included in addition to the positive electrode active material precursor and the lithium raw material during the mixing. For example, during the mixing, the aforementioned M¹-containing raw material or the X-containing raw material, which will be described below, may be additionally mixed. In this case, the X-containing raw material may be, for example, Na₃PO₄, K₃PO₄, Mg₃(PO₄)₂, AlF₃, NH₄F, LiF, or the like, but is not limited thereto. When a part of oxygen is replaced by the X element as described above, it is possible to obtain an effect of suppressing oxygen deintercalation and the reaction with an electrolyte during charging and discharging of the secondary battery.

Meanwhile, the sintering may be performed at 700 °C to 900 °C, specifically, at 750 °C to 850 °C, and the firing time may be 5 hours to 30 hours, specifically 8 hours to 15 hours, but is not limited thereto.

Meanwhile, after the sintering, washing and drying for removing lithium by-products may be further performed. The washing may be performed, for example, by adding the prepared positive electrode active material in ultrapure water and stirring. In this case, the washing temperature may be 20 °C or lower, specifically, 10 °C to 20 °C, and the washing time may be about 10 minutes to about 1 hour. When the washing temperature and the washing time respectively satisfy the above ranges, the lithium by-product may be effectively removed.

### Positive Electrode and Secondary Battery

The positive electrode active material prepared by the method for preparing a positive electrode active material according to the present invention may be effectively used to prepare a positive electrode for a secondary battery.

Specifically, the positive electrode for a secondary battery according to the present invention includes a positive electrode current collector and a positive electrode active material layer formed on the positive electrode current collector, and in this case, the positive electrode active material layer includes the positive electrode active material as described above.

The positive electrode may be prepared according to a typical method for preparing a positive electrode except that the above-described positive electrode active material is used. For example, the positive electrode may be prepared by dissolving or dispersing components constituting the positive electrode active material layer, that is, a positive electrode active material, a conductive agent, and/or a binder in a solvent to prepare a positive electrode material mixture, coating at least one surface of the positive electrode current collector with the positive electrode material mixture, and then drying and rolling the coated positive electrode current collector, or by casting the positive electrode material mixture on a separate support and then peeling off the support to obtain a film and laminating the obtained film onto the positive electrode current collector.

In this case, the positive electrode current collector is not particularly limited as long as it has conductivity without causing adverse chemical changes in the battery, and, for example, stainless steel, aluminum, nickel, titanium, sintered carbon, or aluminum or stainless steel that is surface-treated with one of carbon, nickel, titanium, silver, or the like may be used. Also, the positive electrode current collector may typically have a thickness of 3 um to 500 µm, and microscopic irregularities may be formed on the surface of the current collector to improve the adhesion of the positive electrode active material. The positive electrode current collector, for example, may be used in various shapes such as a film, a sheet, a foil, a net, a porous body, a foam body, and a non-woven fabric body.

A positive electrode active material layer which includes the positive electrode active material according to the present invention and further optionally includes at least one of a conductive agent and a binder as needed is positioned on at least one surface of the current collector.

The positive electrode active material may be included in an amount of 80 wt% to 99 wt%, for example, 85 wt% to 98 wt% with respect to a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% with respect to the total weight of the positive electrode active material layer.

In addition, the binder serves to improve binding between positive electrode active material particles and the adhesion between the positive electrode active material and the current collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% with respect to the total weight of the positive electrode active material layer.

Meanwhile, the solvent used in the preparation of a positive electrode may be a solvent normally used in the art, and for example, dimethyl sulfoxide (DMSO), isopropyl alcohol, N-methylpyrrolidone (NMP), acetone, or water may be used alone or a mixture thereof may be used. The amount of the solvent used may be appropriately adjusted in consideration of a coating thickness of a slurry, production yield, viscosity, or the like.

In addition, the secondary battery according to the present invention includes a positive electrode, a negative electrode disposed to face the positive electrode, a separator interposed between the positive electrode and the negative electrode, and an electrolyte, wherein the positive electrode is the positive electrode according to the present invention as described above.

Meanwhile, the secondary battery may further optionally include a battery container accommodating an electrode assembly of the positive electrode, the negative electrode, and the separator, and a sealing member for sealing the battery container.

In the secondary battery, the negative electrode includes a negative electrode current collector and a negative electrode active material layer disposed on at least one surface of the negative electrode current collector.

The negative electrode may be prepared by a typical method for preparing a negative electrode, which is known in the art. For example, the negative electrode may be prepared by dissolving or dispersing components constituting the negative electrode active material layer, that is, a negative electrode active material, a conductive agent, and/or a binder in a solvent to prepare a negative electrode material mixture, coating at least one surface of the negative electrode current collector with the negative electrode material mixture, and then drying and rolling the coated negative electrode current collector, or by casting the negative electrode material mixture on a separate support and then peeling off the support to obtain a film and laminating the obtained film onto the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode current collector may typically have a thickness of 3 um to 500 µm, and as in the case of the positive electrode current collector, microscopic irregularities may be formed on the surface of the negative electrode current collector to enhance the adhesion of a negative electrode active material. The negative electrode current collector, for example, may be used in various shapes such as a film, a sheet, a foil, a net, a porous body, a foam body, and a non-woven fabric body.

A compound capable of reversibly intercalating and deintercalating lithium may be used as the negative electrode active material. Specific examples of the negative electrode active material may include a carbonaceous material such as artificial graphite, natural graphite, graphitized carbon fibers, and amorphous carbon; a (semi)metal-based material alloyable with lithium such as Si, Al, Sn, Pb, Zn, Bi, In, Mg, Ga, Cd, a Si alloy, a Sn alloy, or an Al alloy; a (semi)metal oxide which may be doped or undoped with lithium such as SiOₓ (0 < x < 2), SnO₂, vanadium oxide, and lithium vanadium oxide; or a composite including the (semi)metal-based material and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Also, the binder and the conductive agent may be the same as those previously described in the positive electrode.

Meanwhile, in the secondary battery, the separator separates the negative electrode and the positive electrode and provides a movement path of lithium ions, wherein any separator may be used as the separator, without particular limitation, as long as it is typically used in a secondary battery, and particularly, a separator having high moisture-retention ability for an electrolyte solution as well as low resistance to the transfer of electrolyte ions may be preferably used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Meanwhile, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the secondary battery, but is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as Ra-CN (where Ra is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to 9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, *N*-substituted oxazolidinone, *N*,*N-*substituted imidazolidine, ethyleneglycol dialkylether, an ammonium salt, pyrrole, 2-methoxyethanol, or aluminum trichloride, may be further included in the electrolyte in addition to the electrolyte components. In this case, the additive may be included in an amount of 0.1 wt% to 5 wt% based on a total weight of the electrolyte.

The secondary battery including the positive electrode active material according to the present invention as describe above has excellent capacity properties, and high-temperature stability, and thus, may be usefully applied in portable devices such as a mobile phone, a notebook computer, and a digital camera, and in the field of electric cars such as a hybrid electric vehicle (HEV).

In addition, the secondary battery according to the present invention may be used as a unit cell of a battery module, and the battery module may be applied in a battery pack. The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

### Examples

Hereinafter, examples of the present invention will be described in detail so that a person with ordinary skill in the art to which the present invention pertains can easily carry out the present invention. The present invention may, however, be embodied in many different forms and should not be construed as being limited to the examples set forth herein.

### Experimental Data I

### Example 1

Nickel sulfate and manganese sulfate were dissolved in ion-exchanged water such that a molar ratio of nickel and manganese became 0.35:0.65 to prepare 2.4 M of a metal solution, and a 25% aqueous sodium hydroxide solution was prepared separately.

In the co-precipitation reactor set at 50 °C, nitrogen gas was introduced at a rate of 300 L/hr to form a nitrogen atmosphere, and the metal solution was introduced at a rate of 0.5 L/hr and an aqueous sodium hydroxide solution at a rate of 0.3 L/hr to perform co-precipitation reaction for 24 hours. In this case, the co-precipitation reaction was performed by adding air at 15 L/hr (5 volume% with respect to 100 volume% of nitrogen).

Thereafter, the resulting product was washed with water, filtered, and dried at 120 °C for 12 hours to prepare a positive electrode active material precursor.

### Comparative Example 1

Nickel sulfate and manganese sulfate were dissolved in ion-exchanged water such that a molar ratio of nickel and manganese became 0.35:0.65 to prepare 2.4 M of a metal solution, and a 25% aqueous sodium hydroxide solution was prepared separately.

In the co-precipitation reactor set at 50 °C, nitrogen gas was introduced at a rate of 300 L/hr to form a nitrogen atmosphere, and the metal solution was introduced at a rate of 0.5 L/hr, an aqueous sodium hydroxide solution at a rate of 0.3 L/hr, and a 9% aqueous ammonia solution at a rate of 0.12 L/hr to perform co-precipitation reaction.

Thereafter, the resulting product was washed with water, filtered, and dried at 120 °C for 12 hours to prepare a positive electrode active material precursor.

### Comparative Example 2

A positive electrode active material precursor was prepared in the same manner as in Example 1, except that in Example 1, the co-precipitation reaction was performed by injecting air in an amount of 10 volume% with respect to 100 volume% of nitrogen.

### Comparative Example 3

A positive electrode active material precursor was prepared in the same manner as in Example 1, except that in Example 1, the co-precipitation reaction was performed by injecting air in an amount of 50 volume% with respect to 100 volume% of nitrogen.

### Comparative Example 4

A positive electrode active material precursor was prepared in the same manner as in Example 1, except that in Example 1, the co-precipitation reaction was performed by injecting air in an amount of 100 volume% without injecting nitrogen during the co-precipitation reaction.

### Experimental Example 1

The particle characteristics of each positive electrode active material precursor prepared in Examples and Comparative Examples were compared and analyzed.

### (1) SEM Measurement

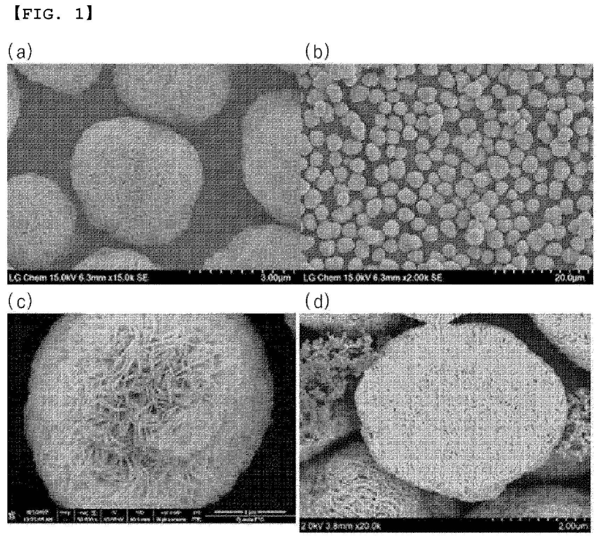

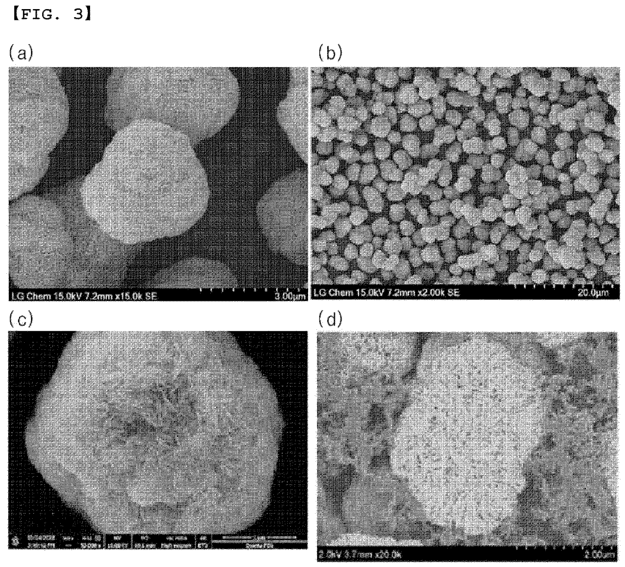

The particle shape of each precursor was examined by using SEM (Hitachi Co., Ltd.), and the results are shown in FIGS. 1 to 5.

### (2) Particle Size Analysis

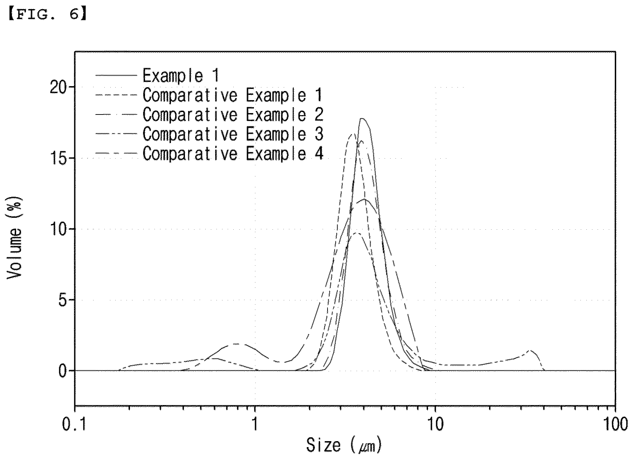

The particle size characteristics of each precursor were measured by setting a refractive index as 1.55 using a particle size analyzer (S-3500, Microtrac). In the measurement device, a diameter (D₅₀) corresponding to 50% of the maximum value, a diameter (D₅) corresponding to 5%, a diameter (D₉₅) corresponding to 95%, a maximum diameter (Dₘₐₓ), and a minimum diameter (Dₘᵢₙ) were calculated in the cumulative particle number distribution depending on the particle diameter, and the results are shown in Table 1 and FIG. 6 below.

### (3) Tap Density Analysis

The tap density was measured by putting 50 g of each precursor into a 50-mL mass cylinder and performing a stroke 3,000 times using TAPDENSER (KYT-4000K, SEISHIN ENTERPRISE Co., Ltd.). The results are shown in Table 1 below.

### (4) Specific Surface Area

The specific surface area of each precursor was measured with a relative pressure (P/Po) of 0.05-0.2 after pre-treating the precursor at 150 °C for 3 hours using Tristar II 3020 (Micromeritics Co.), and the results are shown in Table 1 below.

### (5) Particle Structure Analysis

A cross-sectional image (50 K magnification) of each precursor was obtained by using SEM (Hitachi Co., Ltd.), and the porosity of the precursor, the core porosity, and the ratio of the core area to the total area were analyzed from the image.

Each precursor, carbon black Super-P as a conductive agent, and poly(vinylidene fluoride) as a binder were used in a weight ratio of 54:4:43 (based on 1 g of the precursor) and uniformly mixed with 1.8 g of N-methyl pyrrolidone to prepare a slurry, the prepared slurry was thinly applied on an aluminum foil to a thickness of 0.25 mm, dried at 100 °C to prepare an electrode for measuring the cross-section, and the cross-section of the prepared electrode, to which the precursor was applied, was irradiated with an ion beam by using an ion milling machine to prepare a specimen for SEM measurement.

Then, each cross-sectional image of the precursor was obtained from the specimen by using SEM, a particle was selected from the cross-sectional image, a cross-section of one particle was extracted by using a watershed image processing technique using an image processing program (Pore analysis), and a core part was identified by using an erosion image processing technique. Thereafter, the image was binary-converted by using a threshold image processing technique, and the porosity of the precursor, the core porosity, and the ratio of the core area to the total area were analyzed. In this case, the core part was set as a part in which pores are concentrated inside the particle, and a region formed by connecting the pores present at the outermost edge among the inside pores using a program was set as the core part.

In addition, 10 particles having a particle diameter of 2-8 µm in each cross-sectional image were selected at a time, the porosity of the precursor, the porosity of the core, and the ratio of the core area to the total area were measured for each particle by the above method, and results are shown as the average of the measured values.

**[Table 1]**

| Division | | Example | Comparative Examples | | | |
|---|---|---|---|---|---|---|
| | | 1 | 1 | 2 | 3 | 4 |
| Particle size analysis (µm) | D50 | 3.65 | 3.40 | 3.92 | 3.72 | 3.98 |
| | Dmin | 2.30 | 2.12 | 2.31 | 0.17 | 0.46 |
| | D5 | 2.80 | 2.49 | 2.85 | 0.44 | 0.84 |
| | D95 | 5.14 | 4.97 | 5.90 | 25.14 | 7.09 |
| | Dmax | 7.78 | 7.78 | 9.25 | 37.00 | 8.95 |
| | Span. | 0.64 | 0.73 | 0.78 | 6.64 | 1.57 |
| Specific surface area (m²/g) | | 25.5 | 15.9 | 41.0 | - | - |
| Tap density (g/cc) | | 1.70 | 2.00 | 1.10 | 0.60 | - |
| Porosity (%) | | 11.47 | 11.80 | 11.63 | - | - |
| Core area ratio (%) | | 31.4 | 48.4 | - | - | - |
| Core porosity (%) | | 14.34 | 12.41 | - | - | - |

As shown in Table 1 above, it was confirmed that the positive electrode active material precursor of Example 1 had similar particle size characteristics to those of the positive electrode active material precursor of Comparative Example 1, and had the same tap density as the positive electrode active material precursor of Comparative Example 1. In addition, the positive electrode active material precursor of Example 1 had a similar level of the total porosity to the positive electrode active material precursor of Comparative Example 1, but had a low core area ratio and a high core porosity, and satisfies the porosity ratio and the core area ratio presented by the present invention.

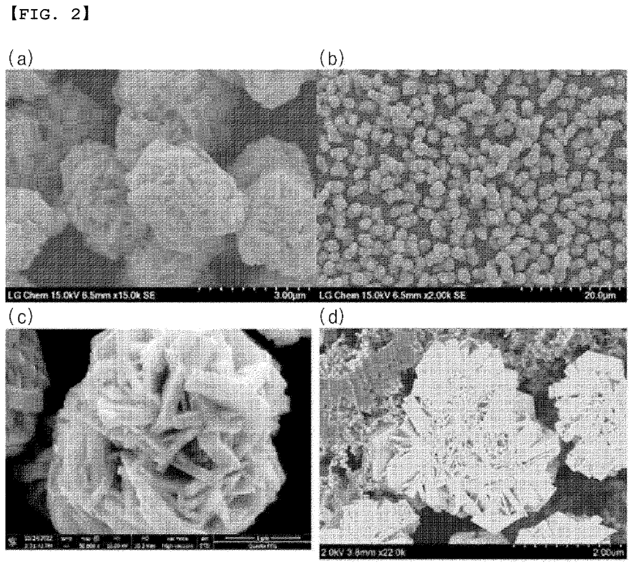

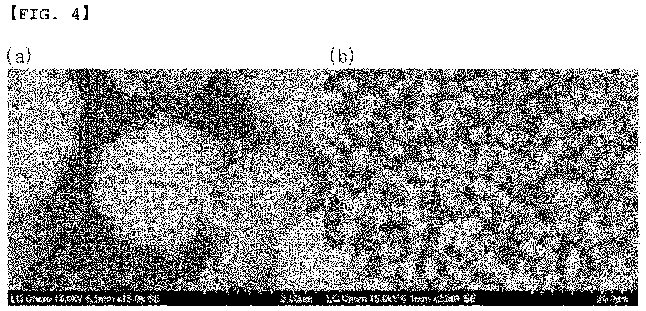

In addition, it was confirmed that the positive electrode active material precursor of Example 1 exhibited a particle characteristic in which the core had a large number of pores, the shell (outside) was dense, and the micropores coexisted, whereas the positive electrode active material precursor of Comparative Example 1 had pores only in the core, and the shell was thick (see FIGS. 2(b) and 4(b)).

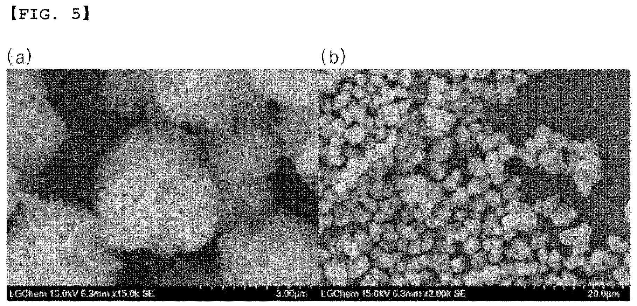

In addition, the positive electrode active material precursor of Comparative Example 2 had significantly reduced tap density compared to Example 1 and Comparative Example 1, and exhibited the particle characteristics in that there are many pores generally inside and outside the particles, and the core and the shell were not distinguished (see FIG. 5(b)).

### Experimental Example 2

Each positive electrode active material precursor prepared in Examples and Comparative Examples were used to prepare a positive electrode active material, and the particle characteristics thereof were compared and analyzed.

Each positive electrode active material precursor and LiOH were mixed such that the molar ratio of the transition metal (Ni and Mn) in the precursor and Li in the LiOH became 1:1.35, and then the mixture was sintered at 700 °C for 15 hours in an air atmosphere to prepare each positive electrode active material.

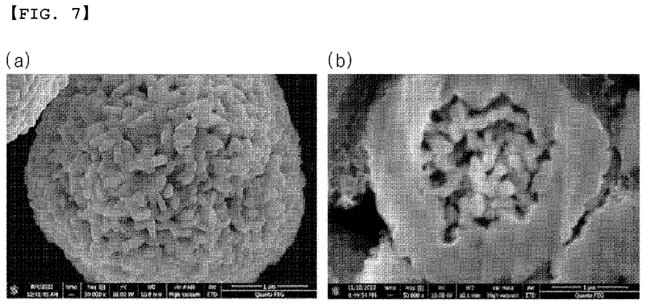

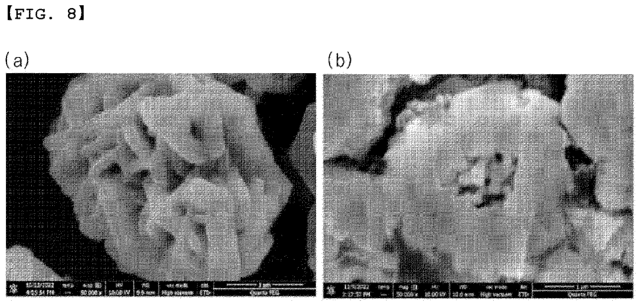

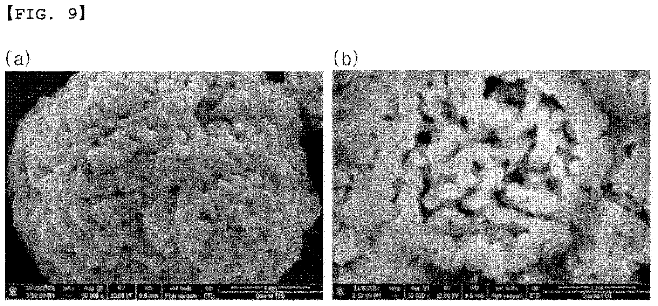

The particle shape of each prepared positive electrode active material was examined at a magnification of 50K by using SEM (Hitachi Co., Ltd.), and the results are shown in FIGS. 7 to 9.

In addition, the ratio of the shell thickness to the particle radius of the positive electrode active material was analyzed, and the results are shown in Table 2 below.

The ratio of the shell thickness to the semi-major axis of the particle was calculated with (shell thickness / particle semi-major axis) × 100 by preparing the electrode for measuring a cross-section in the same manner as in Experimental Example 1 except that the active material was used instead of the precursor, preparing a specimen for SEM measurement from the electrode, obtaining the cross-sectional image at a 50K magnification through SEM, measuring the semi-major axis of the particle, and using the distance from the outer edge of the core to the outer surface of the particle on the semi-major axis line as the shell thickness. In this case, the outer edge of the core was determined to be the outer edge of the core by considering the part where pores are concentrated inside the particle as the core, and the pores, which were present at the outermost edge among the inside pores, as the boundary between the core and the shell. In addition, 10 particles having a particle diameter of 2 µm to 8 µm in each cross-sectional image were selected at a time, a ratio of a shell thickness to a particle semi-major axis with respect to each particle was calculated using the above method, and the results are shown as an average value of these values.

**[Table 2]**

| Division | Example 1 | Comparative Example 1 | Comparative Example 2 |
|---|---|---|---|
| Shell thickness ratio (%) | 47.45 | 66.95 | No shell |

As shown in Table 2 above, it is confirmed that the positive electrode active material of Example 1 satisfies the range presented by the thickness ratio of the shell to the particle semi-major axis.

### Experimental Example 3

A positive electrode active material was prepared by using each of positive electrode active material precursors prepared in Examples and Comparative Examples, and a battery was manufactured by using the positive electrode active material, and then battery performance was evaluated.

### (1) Preparation of Positive Electrode Active Material

Each positive electrode active material precursor and LiOH were mixed such that the molar ratio of the transition metal (Ni and Mn) in the precursor and Li in the LiOH became 1:1.35, and then the mixture was sintered at 700 °C for 15 hours in an air atmosphere to prepare each positive electrode active material.

### (2) Preparation of Positive Electrode

Each of prepared positive electrode active materials, a carbon black conductive agent, and a PVdF binder were mixed in an N-methylpyrrolidone solvent at a weight ratio of 96.5:1.5:2.0 to prepare a positive electrode material mixture (viscosity: 5,000 mPa·s), and one surface of an aluminum current collector was coated with the positive electrode material mixture, dried at 130 °C, and then rolled to prepare a positive electrode.

### (3) Manufacture of Battery

A lithium metal was used as the negative electrode.

An electrode assembly was prepared by interposing a porous polyethylene separator between the positive electrode and the negative electrode, was positioned inside a battery case, and an electrolyte solution was injected into the case, thereby manufacturing a lithium secondary battery. In this case, the electrolyte solution was prepared by dissolving 1.0 M lithium hexafluorophosphate (LiPF₆) in an organic solvent composed of ethylene carbonate/diethyl carbonate/ethylmethyl carbonate (mixing volume ratio of EC/ DEC/EMC=3/2/5).

Each lithium secondary battery half-cell manufactured as described above was charged to 4.4 V and 0.33 C in a constant current/constant voltage (CCCV) mode at 25 °C, and discharged to 2.5 V at a constant current of 0.33 C to measure initial charge and discharge capacity and efficiency. The results are shown in Table 3 below:

**[Table 3]**

| Division | Initial charge capacity (mAh/g) | Initial discharge capacity (mAh/g) | Initial efficiency (%) |
|---|---|---|---|
| Example 1 | 216.2 | 205.4 | 95.0 |
| Comparative Example 1 | 203.6 | 190.5 | 93.6 |
| Comparative Example 2 | 207.2 | 193.8 | 93.5 |

Referring to Table 3 above, it may be confirmed that the positive electrode active material of Example 1 has excellent initial charge and discharge capacity and efficiency compared to the positive electrode active materials of Comparative Example 1 and Comparative Example 2.

### Experimental Data II

### Example 2

A reaction solution was prepared by performing the co-precipitation reaction in the same manner as in Example 1.

Thereafter, the reaction solution was aged by allowing the reaction solution to stand under the conditions of a pH of 13 and a temperature of 50 °C for 6 hours while maintaining a nitrogen atmosphere. Thereafter, the resulting product was washed with water, filtered, and dried at 120 °C for 12 hours to prepare a positive electrode active material precursor.

### Example 3

A positive electrode active material precursor was prepared in the same manner as in Example 2, except that the washing after the aging was performed by performing primary washing with 2 wt% aqueous sodium hydroxide solution and secondary washing with distilled water in Example 2.

### Experimental Example 4

The particle characteristics of the positive electrode active material precursors of Example 2 and Example 3 were analyzed.

### (1) SEM Measurement

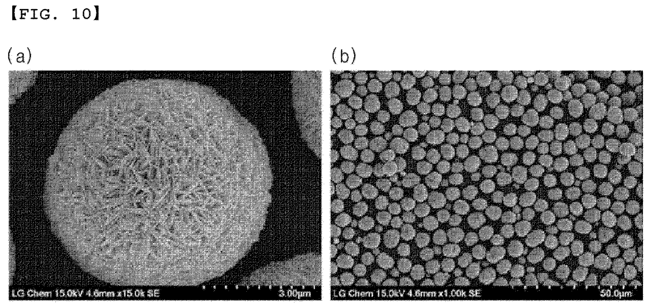

The particle shape of each precursor was examined by using SEM (Hitachi Co., Ltd.) at a 1K magnification and 15K magnification, and the results are shown in FIGS. 10 to 11.

### (2) XRD Measurement

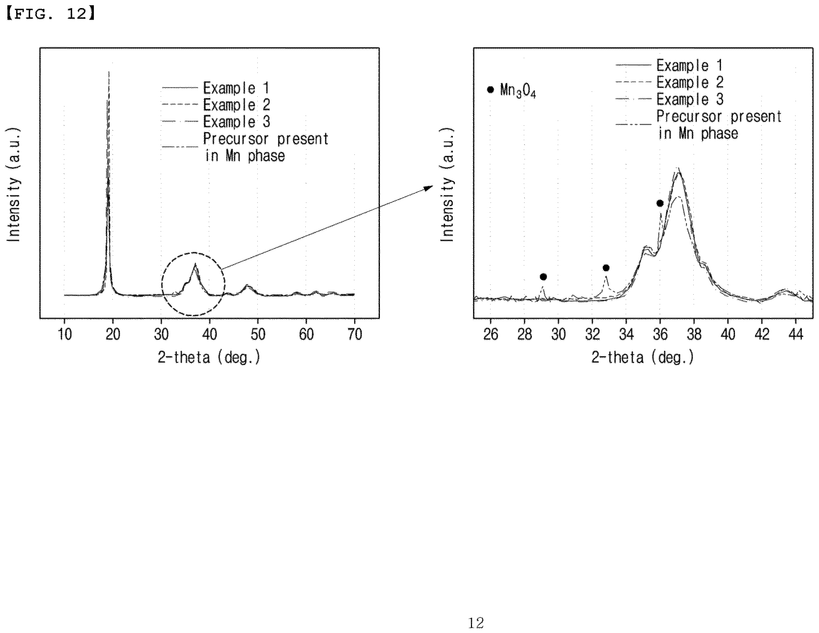

By using XRD (Rigaku), the crystallinity of each precursor was analyzed by setting a start angle as 10°, an end angle as 70°, and a scan speed as 4°/min, and the results are shown in FIG. 12.

### (3) Particle Size Analysis

The particle size characteristics of each precursor were measured by setting a refractive index as 1.55 using a particle size analyzer (S-3500, Microtrac). In the measurement device, a diameter (D₅₀) corresponding to 50% of the maximum value, a diameter (D₅) corresponding to 5%, a diameter (D₉₅) corresponding to 95%, a maximum diameter (Dₘₐₓ), and a minimum diameter (Dₘᵢₙ) were calculated in the cumulative particle number distribution depending on the particle diameter, and the results are shown in Table 4 below.

### (4) Tap Density Analysis

The tap density was measured by putting 50 g of each precursor into a 50-mL mass cylinder and performing a stroke 3,000 times using TAPDENSER (KYT-4000K, SEISHIN ENTERPRISE Co., Ltd.). The results are shown in Table 4 below.

### (5) Specific Surface Area

The specific surface area of each precursor was measured with a relative pressure (P/Po) of 0.05-0.2 after pre-treating the precursor at 150 °C for 3 hours using Tristar II 3020 (Micromeritics Co.), and the results are shown in Table 4 below.

### (6) Classification rate (%)

The classification rate is the actual amount of each precursor obtained after drying, was calculated with Equation 2. Classification rate (%) = [Weight (kg) of precursor after classification / weight (kg) of precursor before classification) × 100

**[Table 4]**

| Division | | Example | | |
|---|---|---|---|---|
| | | 1 | 2 | 3 |
| Particle size analysis (µm) | D₅₀ | 3.65 | 7.04 | 7.02 |
| | Dₘᵢₙ | 2.30 | 3.89 | 3.89 |
| | D₅ | 2.80 | 5.45 | 5.44 |
| | D₉₅ | 5.14 | 9.68 | 9.59 |
| | Dₘₐₓ | 7.78 | 15.56 | 13.08 |
| | Span. | 0.64 | 0.60 | 0.59 |
| Specific surface area (m²/g) | | 25.5 | 18.4 | 18.5 |
| Tap density (g/cc) | | 1.70 | 1.88 | 1.88 |
| Classification rate (%) | | 100.00 | 99.99 | 99.99 |

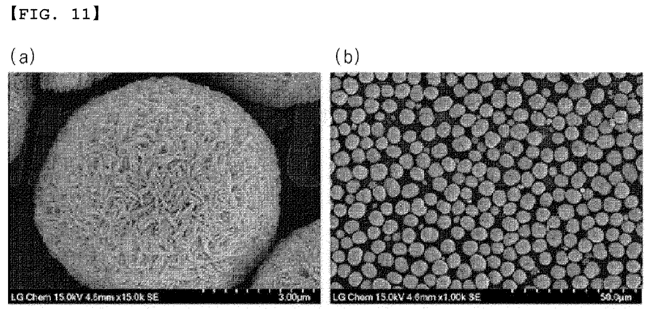

Referring to FIGS. 10 and 11, it was confirmed that the positive electrode active material precursors of Examples 2 and 3 exhibited a particle shape similar to that of the positive electrode active material precursor of Example 1, but had an excellent classification rate, a low specific surface area, and a high tap density compared to those of the positive electrode active material precursor of Example 1. In addition, it was confirmed through FIG. 12 that no manganese oxide (Mn₃O₄) peak was observed in the positive electrode active material precursors prepared in Example 2 and Example 3.

The result indicates that, when the positive electrode active material precursor of the present invention is prepared by a preparation method further including aging and washing, the metal oxide generation is suppressed by preventing the oxidation of the transition metal hydroxide without changing the characteristics of the precursor particles, thereby having no problems of aggregation and classification during drying such that the classification ratio is remarkably excellent and there are no impurities in the precursor or there is an effect of significantly reducing the impurities.

### Experimental Example 5

A positive electrode active material was prepared by using each of positive electrode active material precursors prepared in Examples 2 and 3, and a battery was manufactured by using the positive electrode active material, and then battery performance was evaluated, and the results are shown in Table 5.

Here, the preparation of the positive electrode active material, the initial charge and discharge capacity, and the initial efficiency were carried out in the same manner as in Experimental Example 3. In addition, measurement was performed with C-rate, and the battery was charged with 0.1 C, and discharged with 0.1 C, this was repeated 30 times, and then the capacity retention was confirmed.

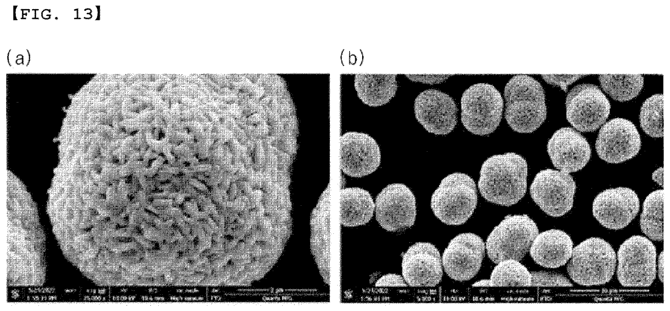

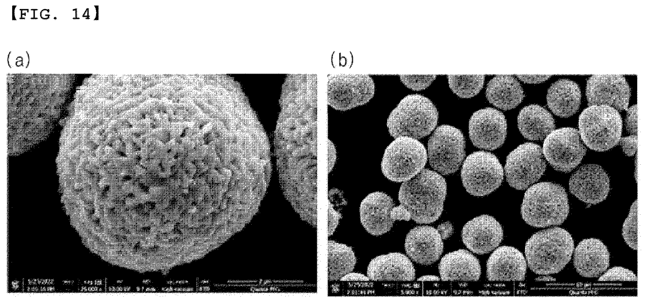

In addition, the particle shape of each precursor was examined by using SEM (Hitachi Co., Ltd.) at a 1K magnification and 25K magnification, and the results are shown in FIGS. 13 to 14.

t[Table 5]

| | | | | |
|---|---|---|---|---|
| Division | Initial charge capacity (mAh/g) | Initial discharge capacity (mAh/g) | Initial efficiency | Capacity retention (%) |
| Example 2 | 232.0 | 214.5 | 92.5 | 99.1 |
| Example 3 | 233.0 | 216.5 | 92.9 | 99.0 |
| Example 1 | 216.2 | 205.4 | 95.0 | 99.0 |

r

Referring to Table 5 above, it is confirmed that the positive electrode active materials of Examples 2 and 3 have excellent charge and discharge capacity compared to the positive electrode active material of Example 1.

## Claims

1. A positive electrode active material precursor comprising:
Ni and Mn; and
secondary particles formed by the aggregation of a plurality of primary particles,
wherein the secondary particles have a ratio of a core area to a total area of the particles (core area/total area) of 28.7% to 34.1%, and
the porosity represented by Equation 1 below is 11.3% to 11.7%:Porosity (%)= (pore area of total particles / area of total particles) × 100

2. The positive electrode active material precursor of claim 1, wherein the secondary particles have a core porosity of 13.5% to 15.0%.

3. The positive electrode active material precursor of claim 1, wherein the secondary particles have an average particle diameter (D₅₀) of 3 um to 15 µm.

4. The positive electrode active material precursor of claim 1, wherein the primary particles have a needle shape having a thickness of 40 nm to 100 nm and an aspect ratio of 3 to 10.

5. The positive electrode active material precursor of claim 1, which is represented by Formula 1 below:
[Formula 1] [NiₐMn_{b}M¹_{c}](OH)₂
wherein, in Formula 1 above, 0<a<0.4, 0.5≤b<1, and 0≤c≤0.1 are satisfied, and M¹ is at least one selected from the group consisting of Cu, Fe, Mg, B, Cr, V, Ti, Ta, Nb, Mo, Y, W, and Zr.

6. The positive electrode active material precursor of claim 1, wherein a specific surface area is 20 m²/g to 35 m²/g, and a tap density is 1.4 g/cc to 2.0 g/cc.

7. The positive electrode active material precursor of claim 1, wherein a specific surface area is 15 m²/g to 30 m²/g, and a tap density is 1.4 g/cc to 2.0 g/cc.

8. A method for preparing a positive electrode active material precursor, the method comprising a step of performing a co-precipitation reaction on at least two transition metal raw material in the presence of a basic aqueous solution in a nitrogen atmosphere to prepare a reaction solution including a transition metal hydroxide,
wherein the co-precipitation reaction is performed by adding air in the absence of ammonia.

9. The method of claim 8, wherein the air is added in an amount of greater than 0 volume% and less than 10 volume% based on 100 volume% of nitrogen.

10. The method of claim 8, wherein the co-precipitation reaction is performed by continuously injecting air, and
the total amount of air injected during the co-precipitation reaction is greater than 0 to 5 volume% based on 100 volume% of the total amount of nitrogen used during the co-precipitation reaction.

11. The method of claim 8, further comprising a step of aging the reaction solution,
wherein the aging is performed by allowing the reaction solution to stand for 6-24 hours in a nitrogen atmosphere under the condition of a pH of 12 to 14.

12. The method of claim 8, wherein the aging is performed in a temperature range of 30 °C to 50 °C.

13. The method of claim 8, comprising steps of :
preparing a reaction solution including a transition metal hydroxide by the co-precipitation reaction of at least two transition metal raw materials in the presence of a basic aqueous solution in a nitrogen atmosphere;
aging the reaction solution; and
sequentially performing washing, filtration, and drying.

14. The method of claim 13, wherein the washing is performed by sequentially performing a primary washing and a secondary washing,
the primary washing is performed with a basic aqueous solution, and
the secondary washing is performed with distilled water.

15. The method of claim 8, wherein the transition metal is at least two selected from among Ni, Co, Mn, Cu, Fe, Mg, B, Cr, V, Ti, Ta, Nb, Y, Mo, W and Zr.

16. A positive electrode active material comprising:
a lithium transition metal oxide which is a reaction product of the positive electrode active material precursor of claim 1 and a lithium raw material; and
secondary particles formed by the aggregation of a plurality of primary particles,
wherein the secondary particles have a ratio of a shell thickness to a semi-major axis of the particle of 30% to 60%.

17. The method of claim 16, which is represented by Formula 2 below:
[Formula 2] Liₓ[NiₐMn_{b}M¹_{c}]O₂
wherein, in Formula 2 above, 1.1<a<1.3, 0<a<0.4, 0.5≤b<1, 0≤c≤0.1, and x+a+b+c=2 are satisfied, and M¹ is at least one selected from the group consisting of Cu, Fe, Mg, B, Cr, V, Ti, Ta, Nb, Mo, Y, W, and Zr.

18. A method for preparing a positive electrode active material, the method comprising steps of:
mixing the positive electrode active material precursor described in claim 1 and a lithium raw material; and
sintering the mixture.

19. The method of claim 18, wherein the positive electrode active material precursor and the lithium raw material are mixed such that a molar ratio of the positive electrode active material precursor and lithium elements in the lithium raw material becomes 1:1.2 to 1:1.6.
